# EUROPÄISCHE PATENTANMELDUNG

(11) **EP 1 808 361 A1**
(43) Veröffentlichungstag der Anmeldung: **18.07.2007**
(21) Anmeldenummer: 06126537.7
(22) Anmeldetag: 19.12.2006
(51) Int. Cl.: B62D 5/06, B62D 5/22

(54) **Lenkvorrichtung für Kraftfahrzeuge**

(30) Priorität: 11.01.2006 DE 102006001301
(71) Anmelder: ZF-Lenksysteme GmbH, 73527 Schwäbisch Gmünd (DE)
(72) Erfinder: Kogel, Walter, 73453, Abtsgmünd (DE); Funk, Stefan, 73574, Iggingen (DE)

(57) **Zusammenfassung**

Die Erfindung betrifft eine Lenkvorrichtung (1) für Kraftfahrzeuge mit hydraulischer Hilfskraftunterstützung zur Lenkung mindestens eines Fahrzeugrads. Erfindungsgemäß ist vorgesehen, dass zur Reduzierung der Hilfskraftunterstützung durch eine Kolben-Zylindereinheit in beide Lenkrichtungen jeweils ein Lenkbegrenzungsventil (20, 21) vorgesehen ist, mit dem der Druck in einer Zylinderkammer (9, 10) der Kolben-Zylindereinheit reduzierbar ist. Die Lenkbegrenzungsventile sind von einem linear verschiebbaren Bauteil der Lenkvorrichtung bei einer vorgegebenen linearen Auslenkung betätigbar.

## Beschreibung

Die Erfindung betrifft eine Lenkvorrichtung für Kraftfahrzeuge mit hydraulischer Hilfskraftunterstützung gemäß dem Oberbegriff des Anspruches 1.

Die DE 101 30 812 A1 zeigt eine Lenkvorrichtung mit hydraulischer Hilfskraftunterstützung. Die bekannte Lenkvorrichtung weist eine Lenkspindel mit als Lenkrad ausgebildeter Lenkhandhabe auf. An dem dem Lenkrad abgewandten Ende der Lenkspindel ist ein Antriebsritzel vorgesehen, welches in eine linear verschiebbar angeordnete Zahnstange eingreift. Integraler Bestandteil der Zahnstange ist ein als Kolben-Zylindereinheit ausgebildeter Servomotor mit zwei Zylinderkammern. Durch Beaufschlagung der Zylinderkammern mit Hydraulikflüssigkeit wird die von dem Lenkrad vermittelte Lenkbewegung unterstützt. Nachteilig bei der bekannten Lenkvorrichtung ist es, dass die Beanspruchung der Lenkvorrichtung infolge der hohen Hilfskraftunterstützung in den Anschlagstellungen der Fahrzeugräder sehr hoch ist. Hinzu kommt eine starke thermische Belastung der Hydraulikpumpen im Bereich der Endanschläge.

Der Erfindung liegt die Aufgabe zugrunde, eine Lenkvorrichtung mit hydraulischer Hilfskraftunterstützung vorzuschlagen, bei der die Belastung von Bauteilen bei Erreichen der maximalen Auslenkung der Fahrzeugräder reduziert ist.

Diese Aufgabe wird mit den Merkmalen des Anspruchs 1 gelöst. Vorteilhafte Ausgestaltungen der Erfindung sind in den Unteransprüchen angegeben.

Der Erfindung liegt der Gedanke zugrunde, die Hilfskraftunterstützung bei Erreichen eines vorgegebenen, vorzugsweise maximalen, Lenkwinkels durch die Verwendung von jeweils einem Lenkbegrenzungsventil für jede Lenkrichtung zu reduzieren. Mittels jedes Lenkbegrenzungsventils ist der Druck in einer Zylinderkammer reduzierbar. Dies kann beispielsweise dadurch bewerkstelligt werden, dass das Lenkbegrenzungsventil den Hydraulikflüssigkeitsstrom teilweise oder vollständig direkt oder indirekt zurück zu einem Vorratsbehälter leitet. Durch die Reduzierung des Drucks in einer Zylinderkammer wird auch die Druckdifferenz zwischen den Zylinderkammern reduziert, wodurch die zur Lenkung benötigte Muskelkraft ansteigt. Erfindungsgemäß werden die Lenkbegrenzungsventile über mindestens ein linear verschiebbares Bauteil der Lenkvorrichtung betätigt. Das linear verschiebbare Bauteil und die Kolben-Zylindereinheit sind derart relativ zueinander angeordnet, dass durch lineares Verschieben des Bauteils immer dann ein Lenkbegrenzungsventil betätigt wird, wenn eine vorgegebene lineare Auslenkung des Bauteils, die mit einem bestimmten Lenkwinkel der Fahrzeugräder korreliert, erreicht bzw. überschritten wird.

Eine weitere Möglichkeit zur Reduzierung der Hilfskraftunterstützung mittels der Lenkkraftventile besteht darin, einen hydraulischen Kurzschluss zwischen den Zylinderkammern bzw. den Hydraulikleitungen zur Zu- und/oder Ableitung von Hydraulikflüssigkeit in die bzw. von den Zylinderkammern herzustellen. Grundsätzlich ist es gleichgültig, ob die Hydraulikleitungen untereinander, die Zylinderkammern untereinander oder eine Hydraulikleitung mit einer Zylinderkammer kurzgeschlossen wird. Wesentlich ist es, dass eine Reduzierung des Hydraulikflüssigkeitsdrucks in einer Zylinderkammer resultiert, wodurch wiederum die Druckdifferenz zwischen den Zylinderkammern reduziert wird. Es ist denkbar, dass jede Zylinderkammer eine Vorlaufhydraulikleitung und eine Rücklaufhydraulikleitung aufweist. In diesem Fall wird über das Lenkbegrenzungsventil ein hydraulischer Kurzschluss zwischen einer Vorlaufhydraulikleitung und einer Rücklaufhydraulikleitung oder unmittelbar zwischen den Zylinderkammern hergestellt. Vorteilhafter ist es jedoch, wenn jede Zylinderkammer nur mit einer Hydraulikleitung verbunden ist, wobei die beiden Hydraulikleitungen über ein Steuerventil wechselseitig als Vorlaufleitung und Rücklaufleitung geschaltet werden können. In diesem Fall werden die als Vorlaufleitung geschaltete Hydraulikleitung und die als Rücklaufleitung geschaltete Hydraulikleitung kurzgeschlossen. Sobald durch Betätigung eines Lenkbegrenzungsventil ein vollständiger Druckausgleich zwischen beiden Zylinderkammern hergestellt ist, werden keine Verstellkräfte mehr von der Kolben-Zylindereinheit auf Bauteile der Lenkvorrichtung ausgeübt. Dies führt zu einem Kraftanstieg am Lenkrad. Bei vollkommenem Druckausgleich kann nur noch rein mechanisch weitergelenkt werden. Es ist denkbar, das Lenkbegrenzungsventil derart auszubilden, dass die Hilfskraftunterstützung bei Erreichen der vorgegebenen linearen Auslenkung bzw. bei Überschreiten derselben nicht abrupt, sonder langsam abnimmt. Da die Hydraulikflüssigkeit durch Kurzschließen der Hydraulikleitungen bzw. der Zylinderkammern im Kreislauf gepumpt wird, wird auch die thermische Belastung der Hydraulikpumpe vermieden.

Vorzugsweise arbeitet die Hydraulikpumpe bei sämtlichen Möglichkeiten zur Reduzierung des Drucks in einer Zylinderkammer mittels eines Lenkbegrenzungsventil unvermindert weiter. Hierdurch kann auf eine aufwendige Pumpensteuerung verzichtet werden.

In Ausgestaltung der Erfindung ist vorgesehen, dass die vorgegebene lineare Auslenkung dem Endanschlag der Zahnstange und/oder der Kolben-Zylindereinheit entspricht. Es ist jedoch auch denkbar, die Hilfskraftunterstützung vor Erreichen der Endanschläge der Zahnstange und/oder der Kolben-Zylindereinheit mittels der Lenkbegrenzungsventile zu reduzieren.

Es ist von Vorteil, wenn an dem linear verschiebbaren Bauteil mindestens ein Betätigungsmittel angeordnet ist, welches mit mindestens einem Lenkbegrenzungsventil zusammenwirkt. Über das Betätigungsmittel, welches im einfachsten Fall als Vorsprung ausgebildet sein kann, wird das Lenkbegrenzungsventil bei Überschreiten bzw. Erreichen einer vorgegebenen Auslenkung geschaltet. Das Betätigungsmittel stellt also das mit dem Lenkbegrenzungsventil unmittelbar in Wechselwirkung tretende Bauteil dar.

Um die Anordnung des Betätigungsmittels an dem Bauteil zu vereinfachen, ist es von Vorteil, wenn nicht ein gemeinsames Betätigungsmittel für beide Lenkbegrenzungsventile vorgesehen ist, sondern wenn jedem Lenkbegrenzungsventil ein eigenes Betätigungsmittel zugeordnet ist.

Damit der Auslösepunkt der Lenkbegrenzungsventile in gewissen Grenzen einstellbar ist, ist in Ausgestaltung der Erfindung vorgesehen, dass das Betätigungsmittel manuell oder automatisch längenverstellbar ist. Je nach eingestellter Länge des Betätigungsmittels trifft das Betätigungsmittel früher oder später auf das auszulösende Lenkbegrenzungsventil, wodurch das Lenkbegrenzungsventil früher oder später ausgelöst wird.

Eine konstruktiv einfache Möglichkeit zur Realisierung der Längenverstellbarkeit des Betätigungsmittels besteht in Weiterbildung der Erfindung darin, dass das Betätigungsmittel eine Stellschraube oder eine Schraubenhülse umfasst, die von einem linear verschiebbaren Bauteil der Lenkvorrichtung getragen ist. Durch das Drehen der Stellschraube oder der Schraubenhülse in die eine oder andere Richtung wird die wirksame Länge des Betätigungsmittels verstellt. Es ist denkbar, hierfür einen Stellmotor einzusetzen, um eine automatische Justage des Auslösezeitpunktes der Lenkbegrenzungsventile zu realisieren.

Es ist zweckmäßig, das Lenkbegrenzungsventil als Überdruckventil auszubilden, das unabhängig von der linearen Auslenkung des Bauteils mit dem Betätigungsmittel bei Überschreiten eines zulässigen Betriebsdrucks in einer Hydraulikleitung betätigbar ist. Bei Überschreiten eines maximal zulässigen Betriebsdrucks in der beaufschlagten Zylinderkammer wird mittels des als Überdruckventil ausgebildeten Lenkbegrenzungsventils ein hydraulischer Kurzschluss zwischen den Zylinderkammern, insbesondere zwischen den Hydraulikleitungen zur Versorgung der Zylinderkammern, hergestellt. Hierdurch wird die Hydraulikflüssigkeit im Kreis gepumpt. Der Druck in der beaufschlagten Zylinderkammer wird herabgesetzt. Durch die Integration des Überdruckventils in das Lenkbegrenzungsventil resultiert ein geringer Einbauplatzbedarf.

Gemäß einer bevorzugten Ausführungsform der Erfindung ist vorgesehen, dass das Lenkbegrenzungsventil einen axial bzw. linear verschiebbaren Stößel aufweist, der von dem Betätigungsmittel beaufschlagbar ist. Dieser Stößel ist durch einen Druckraum geführt, welcher mit einer Hydraulikversorgungsleitung verbunden ist. Mittels des Betätigungsmittels wird der Stößel linear in Richtung eines Dichtkörpers verschoben, wodurch dieser von seinem Dichtsitz abgehoben wird, wodurch wiederum beide Hydraulikleitungen der Zylinderkammern kurzgeschlossen werden. Der Dichtkörper kann jedoch auch unabhängig von dem Stößel durch die in dem Druckraum befindliche Hydraulikflüssigkeit bei Überschreiten eines maximal zulässigen Drucks verschoben werden. Auf die beschriebene Weise erhält das Lenkbegrenzungsventil eine Doppelfunktion. Es dient zum einen als Lenkbegrenzungsventil und zum anderen als Überdruckventil.

Es ist von Vorteil, wenn der Stößel und/oder der Dichtkörper federkraftbelastet sind. Mittels der Feder wird der Dichtkörper in seinen Dichtsitz gepresst. Der Dichtkörper kann nur dann linear verschoben werden, wenn entweder der Hydraulikflüssigkeitsdruck im Druckraum so groß ist, dass die dadurch auf den Dichtkörper wirkende Kraft größer ist als die Federkraft, oder wenn die durch das Verschieben des Stößel auf den Dichtkörper ausgeübte Kraft größer ist als die Federkraft. Mit Vorteil ist auch der Stößel in Richtung von dem Dichtkörper weg federkraftbelastet. Somit schließt das Lenkbegrenzungsventil automatisch, sobald das Betätigungsmittel aus der vorgegebenen Auslenkposition durch Drehen des Lenkrades wegbewegt wird, bzw. sobald der maximal zulässige Überdruck in einer Hydraulikleitung nicht mehr überschritten wird.

Es ist zweckmäßig, an jeder Stirnseite der Zahnstange ein Betätigungsmittel anzuordnen, wobei die Betätigungsmittel mit den den Stirnseiten gegenüberliegenden, ortsfesten Lenkbegrenzungsventilen zusammenwirken. Durch die ortsfeste Anordnung der Lenkbegrenzungsventile, bevorzugt an Halteplatten, werden diese bei der Verstellung der Zahnstange und/oder der Kolben-Zylinder-einheit nicht bewegt, wodurch keine flexiblen Hydraulikleitungen erforderlich sind.

Eine Möglichkeit zur Realisierung der Anordnung der Betätigungsmittel an den Stirnseiten der Zahnstange besteht darin, die Lenkvorrichtung als Mittenabtriebslenkung auszubilden. Dies bedeutet, dass die Verbindung zu den Fahrzeugrädern nicht endseitig von der Zahnstange, sondern mit Abstand zu den Enden der Zahnstange von dieser abgeht. Bevorzugt ist der Kolben auf der Zahnstange angeordnet bzw. wird von einem Teil der Zahnstange gebildet und ist relativ in der ortsfesten Zylindereinheit längsverschieblich gelagert.

Eine weitere Möglichkeit zur Realisierung der stirnseitigen Anordnung der Betätigungsmittel an der Zahnstange besteht darin, die Kolben-Zylindereinheit beabstandet und parallel zu der Zahnstange anzuordnen und über ein Kopplungsteil mit der Zahnstange zu verbinden, so dass eine gemeinsame Linearbewegung vollzogen werden kann. Bei einer derartigen Anordnung ist es vorteilhaft, den Kolben ortsfest und den Zylinder relativ zu dem Kolben linear verschieblich auszubilden. Die Lenkverbindung zu den Fahrzeugrädern ist bevorzugt mit dem linear verschieblichen Zylinder verbunden. Bei dieser Ausführungsform ist es auch denkbar, das Betätigungsmittel am linear verschiebbaren Zylinder anzuordnen.

Neben der Anordnung des Betätigungsmittels am linear verschiebbaren Zylinder, oder an den Stirnseiten der Zahnstange können die Betätigungsmittel beispielsweise auch am Kolben lokalisiert werden, wenn dieser linear verschiebbar ausgebildet ist. Grundsätzlich eignet sich jedes linear verschiebbare Bauteil der Lenkvorrichtung zur Anordnung der Betätigungsmittel.

Weitere Vorteile und zweckmäßige Ausführungen sind den weiteren Ansprüchen, der Figurenbeschreibung und den Zeichnungen zu entnehmen. Es zeigen:

Fig. 1 eine schematische Übersichtsdarstellung einer Lenkvorrichtung mit Hilfskraftunterstützung, wobei ein Servomotor als Kolben-Zylindereinheit ausgebildet ist und mit Abstand sowie parallel zu einer Zahnstange angeordnet ist,

Fig. 2 eine detaillierte Darstellung des Hydrauliksystems der Lenkvorrichtung mit zwei Lenkbegrenzungsventilen, und

Fig. 3 ein vergrößert dargestelltes Lenkbegrenzungsventil.

In den Figuren sind gleiche Bauteile und Bauteile mit gleicher Funktion mit dem gleichen Bezugszeichen gekennzeichnet.

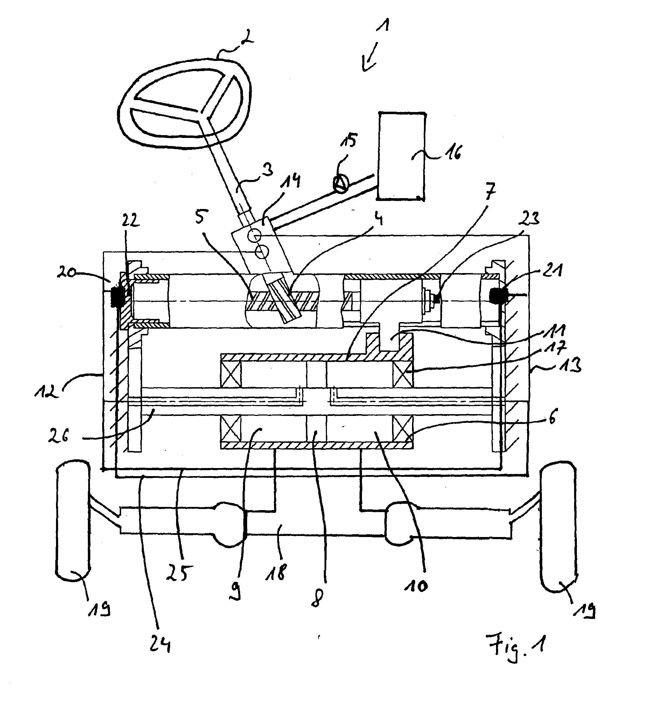

In Fig. 1 ist eine Lenkvorrichtung 1 dargestellt. Die Lenkvorrichtung 1 umfasst eine als Lenkrad ausgebildete Lenkhandhabe 2, die fahrzeuginnenraumseitig auf einer Lenkspindel 3 montiert ist. Auf dem der Lenkhandhabe 2 abgewandten Ende ist ein Antriebsritzel 4 vorgesehen, welches in eine in Fahrzeugquerrichtung linear verschiebbare Zahnstange 5 eingreift. Über das Antriebsritzel 4 und die Zahnstange 5 wird die rotatorische Lenkbewegung der Lenkhandhabe 2 und der Lenkspindel 3 in eine Linearbewegung in Fahrzeugquerrichtung umgewandelt.

Um die benötigte Lenkkraft zu minimieren, ist ein als Zylinderkolbeneinheit ausgebildeter, hydraulischer Servomotor 6 vorgesehen. Der Servomotor 6 umfasst einen parallel zu der Zahnstange 5 und gemeinsam mit dieser linear verschiebbaren Zylinder 7, mit zwei von einem ortsfesten Kolben 8 getrennten Zylinderkammern 9, 10. Durch Beaufschlagung der einen oder anderen Zylinderkammer 9, 10 mit Hydraulikflüssigkeit wird die Bewegung der Zahnstange 5 in die eine oder andere Richtung kraftunterstützt. Hierzu ist der Zylinder 7 über ein Kopplungsteil 11 mechanisch mit der Lenkstange 5 gekoppelt.

Die Zylinderkammer 9 wird über eine Hydraulikleitung 12 mit Hydraulikflüssigkeit versorgt. Die Zylinderkammer 10 wird von einer weiteren Hydraulikleitung 13 bei Bedarf druckbeaufschlagt. Über ein an der Lenkspindel 3 angeordnetes Steuerventil 14 wird entweder die Hydraulikleitung 12 oder die Hydraulikleitung 13 als Vorlaufleitung geschaltet, also mit dem von einer Hydraulikpumpe 15 erzeugten Flüssigkeitsdruck versorgt. Die jeweils andere Hydraulikleitung 13, 12 wird gleichzeitig als Rücklaufleitung geschaltet, so dass die durch die Bewegung des Zylinders 7 verdrängte Hydraulikflüssigkeit über diese Hydraulikleitung 13, 12 zurück in einen Vorratsbehälter 16 fließen kann. Wird beispielsweise von dem Fahrer die Lenkhandhabe 2 derart betätigt, dass sich die Zahnstange 5 in der Zeichnungsebene gemäß Fig. 1 nach rechts bewegt, so wird die Hydraulikleitung 13 über das Steuerventil 14 durch die Hydraulikpumpe 15 mit Hydraulikflüssigkeit versorgt. Hierdurch steigt der Druck in der in der Zeichnungsebene rechten Zylinderkammer 10, wodurch der Zylinderboden 17 und der damit fest verbundene Zylinder 7 in der Zeichnungsebene nach rechts bewegt wird, wodurch die Bewegung der Zahnstange 5 kraftunterstützt wird. Aus der Zylinderkammer 9 strömt während dessen über die Hydraulikleitung 12 verdrängte Hydraulikflüssigkeit in den Vorratsbehälter 16.

Lenkt der Fahrer in die entgegengesetzte Richtung, so wird die Hydraulikleitung 12 und damit die Zylinderkammer 9 mit Hydraulikflüssigkeit versorgt und der Zylinder wandert in die entgegengesetzte Richtung. Hierbei ist die Hydraulikleitung 13 als Rücklaufleitung geschaltet.

Mit dem linear verschiebbaren Zylinder 7 ist das Lenkgestänge 18 fest verbunden, so dass der Lenkwinkel der Fahrzeugräder 19 durch Verschieben des Zylinders 7 verändert wird.

Um die Hilfskraftunterstützung im Bereich der maximalen Auslenkung zu reduzieren, ist zu beiden Seiten der Zahnstange 5 ein Lenkbegrenzungsventil 20, 21 angeordnet. An den Stirnseiten der Zahnstange 5 ist jeweils ein Betätigungsmittel 22, 23 angeordnet. Bei Erreichen des jeweiligen Endanschlages der Zahnstange 5 werden die Lenkbegrenzungsventile 20, 21 von den Betätigungsmitteln 22, 23 geschaltet. Mittels der Lenkbetätigungsventile 20, 21 wird ein Kurzschluss zwischen den beiden Hydraulikleitungen 12, 13 über Verbindungshydraulikleitungen 24, 25 hergestellt. Durch den damit verbundenen Kurzschluss der beiden Zylinderkammern 9, 10 herrscht im gesamten Hydraulikleitungssystem der gleiche Druck. Wird beispielsweise die Hydraulikleitung 12 und damit die Zylinderkammer 9 so lange mit Hydraulikflüssigkeit versorgt, dass die Zahnstange 5 mit dem Betätigungsmittel 22 das in der linken Zeichnungshälfte dargestellte Lenkbegrenzungsventil 20 betätigt, so gelangt die Hydraulikflüssigkeit von der Hydraulikleitung 12 über die Verbindungshydraulikleitung 24 in die als Rücklaufleitung geschaltete Hydraulikleitung 13 und von dort aus zurück in den Vorratsbehälter 16, woraus die Flüssigkeit wieder mittels der Hydraulikpumpe 15 abgezogen und dem Kreislauf zugeführt wird. Solange ein hydraulischer Kurzschluss hergestellt ist, entfällt die Hilfskraftunterstützung durch den Servomotor 6, wodurch sich die Lenkhandhabe 2 nur durch Muskelkraft drehen lässt. Bei Betätigung des gegenüberliegenden Lenkbegrenzungsventils 21 durch das Betätigungsmittel 23 wird die dann als Vorlaufleitung geschaltete Hydraulikleitung 13 mit der in diesem Fall als Rücklaufleitung geschaltete Hydraulikleitung 12 über die Verbindungshydraulikleitung 25kurzgeschlossen.

Die Versorgung der beiden Zylinderkammern 9, 10 über die Hydraulikleitungen 12, 13, welche teilweise durch eine massive, den Kolben tragende Stange 26 geführt sind, erfolgt im Bereich und benachbart zum Kolben 8. Hierdurch wird der Einsatz flexibler Hydraulikleitungen mit Vorteil vermieden.

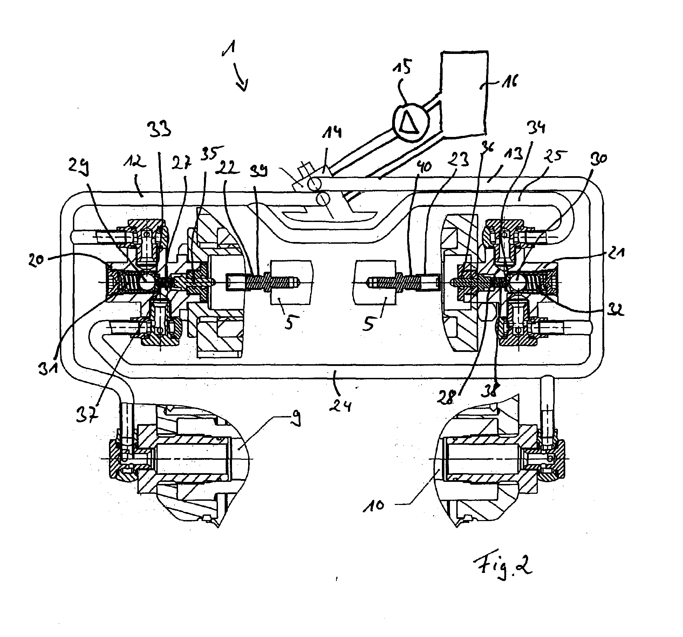

In Fig. 2 sind die wesentlichen Bauteile der erfindungsgemäßen Lenkvorrichtung 1 dargestellt. Dabei sind die Kolben-Zylindereinheit und die Zahnstange 5 nur teilweise gezeigt. Aus Fig. 2 sind die über das Steuerventil 14 wechselseitig als Vorlaufleitung und als Rücklaufleitung schaltbaren Hydraulikleitungen 12, 13 zur Versorgung der Zylinderkammern 9, 10 mit Hydraulikflüssigkeit dargestellt. Die Hydraulikflüssigkeit wird mittels der Hydraulikpumpe 15 aus einem Vorratsbehälter 16 bezogen und in die als Vorlaufleitung geschaltete Hydraulikleitung 12, 13 gepumpt. Über die als Rücklaufleitung geschaltete Hydraulikleitung 13, 12 wird die von der Kolben-Zylindereinheit verdrängte Hydraulikflüssigkeit in den Vorratsbehälter zurückgepumpt. Über die Lenkbegrenzungsventile 20, 21 kann ein Kurzschluss zwischen den Hydraulikleitungen 12, 13 hergestellt werden, wenn eines der Ventile 20, 21 über ein Betätigungsmittel 22, 23 geschaltet wird. Bei Betätigung des in der Zeichnungsebene linken Lenkbegrenzungsventils 20 fließt die Hydraulikflüssigkeit von der Hydraulikleitung 12 über die Verbindungshydraulikleitung 24 zu der Hydraulikleitung 13. Im umgekehrten Fall, also bei der Betätigung des Lenkbegrenzungsventils 21 fließt die Hydraulikflüssigkeit von der Hydraulikleitung 13 in die Verbindungshydraulikleitung 25 und von dort aus zurück in den Vorratsbehälter 16.

Bei dem Ausführungsbeispiel gemäß Fig. 2 sind die Lenkbegrenzungsventile 20, 21 zusätzlich als Überdruckventile ausgebildet. Hierzu ist in jedem Lenkbegrenzungsventil 20, 21 ein Druckraum 27, 28 vorgesehen, der über jeweils eine Verbindungshydraulikleitung 24, 25 mit einer Hydraulikleitung 12, 13 verbunden ist. Die im Druckraum 27, 28 befindliche Hydraulikflüssigkeit wirkt auf einen kugelförmigen Dichtkörper 29, 30, welcher durch eine Schraubenfeder 31, 32 in seinen Dichtsitz 33, 34 gepresst wird.

Übersteigt beispielsweise der Hydraulikflüssigkeitsdruck in der Hydraulikleitung 13 einen maximal zulässigen Wert, so wird der Dichtkörper 29 des in der linken Zeichnungsebene angeordneten Lenkbegrenzungsventils 20 entgegen der Kraft der Schraubenfeder 31 bewegt, wodurch Hydraulikflüssigkeit von der Hydraulikleitung 13 und dem Zylinderraum 10 über die Verbindungshydraulikleitung 24 in die in diesem Fall als Rücklaufleitung geschaltete Hydraulikleitung 12 und somit zurück in Richtung Vorratsbehälter 16 strömt. Somit kann der Überdruck in der Hydraulikleitung 13 und der Zylinderkammer 10 abgebaut werden.

Jedes Lenkbegrenzungsventil 20, 21 weist zusätzlich zur Gewährleistung seiner Lenkbegrenzungsfunktion einen Stößel 35, 36 auf. Beide Stößel 35,36 sind linear verschiebbar angeordnet und axial in Richtung Zahnstange 5 ausgerichtet. Wird die Zahnstange 5 in die eine oder andere Endlage bewegt, so wird der Stößel 35 bzw. 36 entgegen der Kraft einer zugehörigen Feder 37, 38 in Richtung Dichtkörper 29, 30 bewegt, wodurch die Hydraulikleitung 12 und die Hydraulikleitung 13 kurzgeschlossen werden. Da die Hydraulikflüssigkeit im Kreis gepumpt wird, erfolgt keine Hilfskraftunterstützung mehr bei der Lenkung.

Wie in Fig. 2 zu erkennen ist, sind die Betätigungsmittel 22, 23 als Schraubhülsen ausgebildet, die jeweils auf einem Gewinde 39, 40 verdrehbar sind. Hierdurch kann die wirksame Länge der Betätigungsmittel 22, 23 eingestellt und somit der Auslösezeitpunkt der Lenkbegrenzungsventile 20, 21 verändert werden.

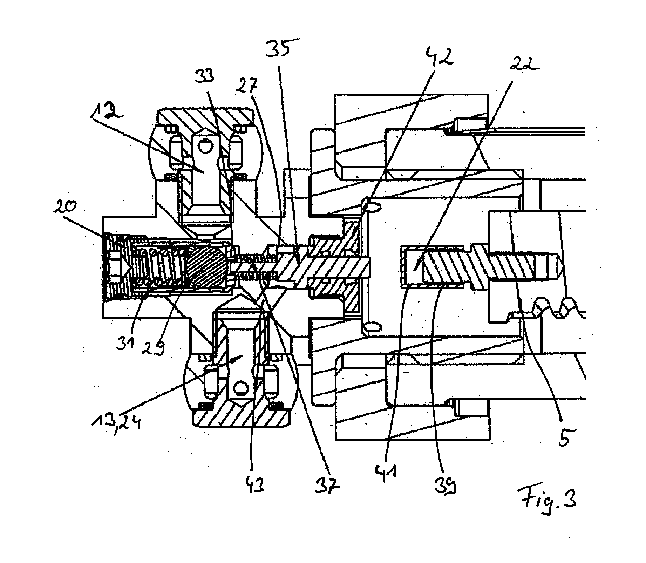

In Fig. 3 ist zu erkennen, dass das Betätigungsmittel 22 in die Stirnseite der Zahnstange 5 eingeschraubt ist. Über die Hülse 41 und das Gewinde 39 ist die wirksame Länge des Betätigungsmittels 22 verstellbar. Beim Durchlenken wird die Hülse 41 des Betätigungsmittels 22 axial auf das Lenkbegrenzungsventil 20 zubewegt, bis das Betätigungsmittel 22 den Stößel 35 ebenfalls axial verschiebt und durch Verschieben des kugelförmigen Dichtkörpers 29 das Lenkbegrenzungsventil öffnet, wodurch die Hydraulikleitungen 12, 13 kurzgeschlossen werden. Durch die Schraubenfeder 31 und die Feder 37 werden der Dichtkörper 29 und der Stößel 35 beim Gegenlenken wieder in ihre in Fig. 3 dargestellte Ausgangsposition verbracht. Die Feder 37 presst dabei den Stößel 35 gegen eine Gewindebuchse 42. Das in dem Lenkbegrenzungsventil 20 integrierte Druckbegrenzungsventil ist auch ohne die Betätigung des Stößels 35 durch das Betätigungsmittel 22 auslösbar. Übersteigt der Druck in der Hydraulikleitung 13 und damit der Druck in dem Druckraum 27, welcher über einen Verbindungskanal 42 mit der Hydraulikleitung 13, bzw. der Hydraulikverbindungsleitung 24 verbunden ist, einen maximal zulässigen Wert, so wird der Dichtkörper 29 von seinem Dichtsitz wegbewegt, wodurch Hydraulikflüssigkeit von der Hydraulikleitung 13 bzw. der Verbindungshydraulikleitung 24 in die Hydraulikleitung 12 strömen kann.

## Patentansprüche

1. Lenkvorrichtung für Kraftfahrzeuge mit hydraulischer Hilfskraftunterstützung zur Lenkung mindestens eines Fahrzeugrads (19), mit einer linear verschiebbar angeordnete Zahnstange (5), und mit einem mit der Zahnstange (6) gekoppelten Servomotor (6), umfassend eine Kolben-Zylindereinheit mit zwei Zylinderkammern (9, 10),
**dadurch gekennzeichnet,**
**dass** zur Reduzierung der Hilfskraftunterstützung durch die Kolben-Zylindereinheit in beide Lenkrichtungen jeweils ein Lenkbegrenzungsventil (20, 21) vorgesehen ist, über das der Hydraulikflüssigkeitsdruck in einer Zylinderkammer reduzierbar ist, und dass die Lenkbegrenzungsventile (20, 21) mittels mindestens eines linear verschiebbaren Bauteils (5, 7, 8, 22, 23) der Lenkvorrichtung (1) bei vorgegebenen linearen Auslenkungen betätigbar sind.

2. Lenkvorrichtung nach Anspruch 1,
**dadurch gekennzeichnet, dass**
jede Zylinderkammer (9, 10) mit mindestens einer Hydraulikleitung (12, 13) verbunden ist, und dass mittels der Lenkbegrenzungsventile ein hydraulischer Kurzschluss zwischen den Zylinderkammern (9, 10) und/oder den Hydraulikleitungen (12, 13) herstellbar ist.

3. Lenkvorrichtung nach einem der vorhergehenden Ansprüche, **dadurch gekennzeichnet,dass** die vorgegebene lineare Auslenkung der Endanschlag der Zahnstange (5) und/oder der Kolben-Zylindereinheit ist.

4. Lenkvorrichtung nach einem der vorhergehenden Ansprüche, **dadurch gekennzeichnet,**
**dass** an dem linear verschiebbaren Bauteil mindestens ein Betätigungsmittel (22, 23) angeordnet ist, das mit mindestens einem Lenkbegrenzungsventil (20, 21) zusammenwirkt.

5. Lenkvorrichtung nach Anspruch 4, **dadurch gekennzeichnet,**
**dass** jedem Lenkbegrenzungsventil ein Betätigungsmittel (22, 23) zugeordnet ist.

6. Lenkvorrichtung nach einem der Ansprüche 4 oder 5,**dadurch gekennzeichnet, dass** das Betätigungsmittel (22, 23) manuell oder automatisch längenverstellbar ausgebildet ist.

7. Lenkvorrichtung nach einem der Ansprüche 4 bis 6, **dadurch gekennzeichnet, dass** das Betätigungsmittel (22, 23) eine Stellschraube oder eine Schraubhülse (41) umfasst.

8. Lenkvorrichtung nach einem der vorhergehenden Ansprüche, **dadurch**
**gekennzeichnet,**
**dass** mindestens eines der Lenkbegrenzungsventile (20, 21) als Überdruckventil ausgebildet ist, das unabhängig von der linearen Auslenkung des Bauteils (5, 7, 8) mit dem Betätigungsmittel (22, 23) bei Überschreiten eines maximal zulässigen Betriebsdrucks in einer Zylinderkammer (9, 10) betätigbar ist.

9. Lenkvorrichtung nach Anspruch 8,
**dadurch gekennzeichnet, dass** das Lenkbegrenzungsventil (20, 21) einen von dem Betätigungsmittel (22, 23) axial verschiebbaren Stößel (35, 36) aufweist, der durch einen Druckraum (27, 28) geführt ist, welcher mit einer Hydraulikleitung mit Hydraulikflüssigkeit beaufschlagbar ist, und dass der Stößel, wenn dieser axial verschoben wird, einen Dichtkörper von seinem Dichtsitz abhebt, wodurch die Hydraulikleitungen der beiden Zylinderkammern Richtungen kurzgeschlossen werden.

10. Lenkvorrichtung nach Anspruch 9,**dadurch gekennzeichnet,**
**dass** der Stößel und/oder der Dichtkörper federkraftbelastet sind.

11. Lenkvorrichtung nach einem der Ansprüche 4 bis 10,**dadurch gekennzeichnet, dass** die Betätigungsmittel (22, 23) an gegenüberliegenden Stirnseiten der Zahnstange (5) angeordnet sind.

12. Lenkvorrichtung nach einem der vorhergehenden Ansprüche,
**dadurch gekennzeichnet, dass** die Lenkbegrenzungsventile (21, 22) mit Abstand und benachbart zu den gegenüberliegenden Stirnseiten der Zahnstange (5) ortsfest angeordnet sind.

13. Lenkvorrichtung nach einem der vorhergehenden Ansprüche,**dadurch**
**gekennzeichnet,**
**dass** der Kolben (8) der Kolben-Zylindereinheit auf der Zahnstange (5) angeordnet, und zusammen mit der Zahnstange (5) in dem ortsfest angeordneten Zylinder (7) verschiebbar ist, und dass die Lenkvorrichtung (1) als Mittenabtriebslenkung ausgebildet ist.

14. Lenkvorrichtung nach einem der vorhergehenden Ansprüche,**dadurch**
**gekennzeichnet,**
**dass** die Kolben-Zylindereinheit beabstandet und parallel zu der Zahnstange (5) angeordnet ist und über ein Kopplungsteil mit der Zahnstange (5) verbunden ist.

15. Lenkvorrichtung nach Anspruch 14,**dadurch gekennzeichnet,**
**dass** der Kolben (8) ortsfest und der Zylinder (7) linear verschiebbar ausgebildet ist.

16. Lenkvorrichtung nach einem der vorhergehenden Ansprüche,
**dadurch gekennzeichnet,dass** das Betätigungsmittel (22, 23) am Kolben (8) oder am Zylinder (7) der Kolben-Zylindereinheit angeordnet ist.
